# EUROPÄISCHE PATENTSCHRIFT

(11) **EP 0 568 887 B1**
(45) Veröffentlichungstag und Bekanntmachung des Hinweises auf die Patenterteilung: **19.07.1995**
(21) Anmeldenummer: 93106698.9
(22) Anmeldetag: 24.04.1993
(51) Int. Cl.: F16L 3/22, A47B 96/14

(54) **Montageschiene**
Mounting bar
Barre de montage

(30) Priorität: 24.07.1992 DE 4224483
(43) Veröffentlichungstag der Anmeldung: 10.11.1993
(73) Patentinhaber: Leifeld, Heinrich, D-33178 Borchen (DE)
(72) Erfinder: Leifeld, Heinrich, D-33178 Borchen (DE)
(74) Vertreter: Hanewinkel, Lorenz, Dipl.-Phys.

(56) Entgegenhaltungen:
- EP-A- 0 151 902
- DE-A- 1 484 936
- DE-A- 2 617 628
- GB-A- 2 209 632

## Beschreibung

Die Erfindung betrifft eine Montageschiene aus Flachstahl, insbesondere zur Installation von Versorgungsleitungen und Sanitär-, Heizungs- und Lüftungsarmaturen, mit mehreren in der Längsrichtung parallel zu den Flachstahllängskanten angeordneten Lochreihen mit Befestigungslöchern, wobei die jeweils in einer Lochreihe angeordneten Befestigungslöcher einen festen rasterförmigen Mittenabstand aufweisen.

Im Bauwesen, insbesondere in der Sanitär-, Heizungs- und Lüftungsbranche, sind unterschiedliche Montageschienen der eingangs genannten Gattung bekannt. Die verschiedenen Hersteller von Befestigungselementen, wie z.B Rohrschellen, oder Armaturen bieten zur Vorwandmontage oder zur Montage in Wandausnehmungen jeweils nur das Produkt eines Herstellers zugeschnittene Montageschienen oder Montageprofileleisten an, welche gewöhnlich nur mit Spezialwerkzeugen verarbeitbar sind. Weiterhin sind die bekannten Montageschienen für die jeweiligen Verwendungszwecke in der Form und im Stichmaß der Befestigungsbohrungen vorgegfertigt. Eine flexible Anpassung der Montageschiene an der Baustelle an die tatsächlichen Montageerfordernisse ist oftmals nicht oder nur mit großem Aufwand möglich. Diese bekannten Montageschienen sind wegen der relativ geringen Produktionsstückzahl teuer. Deshalb müssen bei Verwendung von Befestigungselementen verschiedener Hersteller, z.B. für Heizungsanlagen, Lüftungsanlagen, Fußbodenheizung, Sanitärinstallationen derartig jeweils unterschiedliche Montageschienen verwendet werden. Hierdurch ist nicht nur ein erhöhter Lagerbestand an den unterschiedlichen Montageschienen erforderlich, sondern es müssen auch die Baufahrzeuge oftmals mit letzlich überflüssigen Montageschienen beladen werden, da in der Regel sich der Bedarf an einer bestimmten Montageschienenart erst während der Montagearbeiten herausstellt. Sobald jedoch der erforderliche Montageschienentyp lagermäßig nicht abrufbar ist, verursacht dies wiederum eine Verzögerung der Installationsarbeiten und somit erhöhte Kosten.

Es finden auch leicht biegsame Lochbänder aus Stahl bei der Montage von Installationen Verwendung. Mittels dieser Lochbänder sind zwar die unterschiedlichen Befestigungselemente montierbar, jedoch entspricht deren Lochabstand nicht den im Heizungs- und Sanitärbereich üblichen Stichmaßen. Zudem sind die Lochbänder aufgrund ihrer Biegsamkeit nicht zur stabilen Montage der jeweiligen Befestigungselemente oder Armaturen z.B. in Hohlräumen oder freitragend unter einer Decke geeignet.

Weiterhin ist aus der DE-OS 14 84 936 ein vorgelochtes Bauelement mit Rund- und Langlöchern zum Bau von Regalen und Gerüsten bekannt. Dieses Bauelement hat einen abgewinkelten L-Querschnitt, und es ist ein Abbiegen nicht vorgesehen und nicht ohne Sägearbeit am Schenkel möglich. Zudem deckt die beschriebene Lochung nicht die im Sanitärbereich geläufigen Stichmaße, insbesondere 153 mm, ab.

Weiterhin ist in der DE 26 17 628 A1 ein L-förmig gewinkeltes Stabbauelement zum Zusammenbau von Regalen mit einem in mehreren Reihen versetzt gegeneinander sich regelmäßig wiederholenden Lochraster mit einem quadratischem Grundraster beschrieben. Dieses Stabbauelement ist nicht ohne vorheriges Trennen eines Schenkels biegbar und nicht zur Montage von Sanitäranschlüssen geeignet. Die Lochung aus alternierenden Rund- und Langlöchern weist Längsraster von 25 mm auf, entspricht also nicht dem 10 mm Baumaß der Sanitärinstallationen.

Weiterhin ist in der GB 22 09 632 eine U-förmige Kabelführungsschiene mit einer rastemäßigen parallen Lochung aus alternierenden Lang- und Rundlöchern beschrieben. Durch den U-förmigen Querschnitt ist ein Biegen der Kabelführung nicht ohne ein Trennen der Schenkel möglich. Das Rastermaß ist 25 mm; somit ist nicht das im Sanitärbereich erforderliche 10 mm Rastermaß gegeben.

Aufgabe der Erfindung ist es, die eingangs genannte Montageschiene dahingehend zu verbessern, daß sie systemungebunden mit den unterschiedlichen Befestigungselementen und/oder Armaturen verwendbar und ohne Spezialwerkzeuge leicht biegbar ist sowie den Armaturen einen guten Halt bietet.

Die Aufgabe wird erfindungsgemäß dadurch gelöst, daß die Mitten der Befestigungslöcher der verschiedenen Lochreihen in der Längsrichtung einen Versatz aufweisen, so daß deren Lochmitten einen 10 mm Längsrasterabstand abdecken und daß jeweils abschnittweise solche rastermäßigen Befestigungslöcher paarweise in der Längsrichtung zu Langlöchern mindestens um ein solches Erweiterungsmaß verlängert sind, das kleiner als der Versatz ist, so daß der Längsabstand, mittig der Rundungen der demgemäß versetzten Lochbereiche gemessen, einen standardmäßigen Montageabstand von etwa 153 mm ergibt, und daß sich jeweils in der Längsrichtung mittig zwischen den verlängerten Lochbereichen zentriert rastermäßig mindestens ein Mittel-Befestigungsloch befindet.

Vorteilhafte Ausgestaltungen sind Gegenstand der Unteransprüche.

Die erfindungsgemäße Montageschiene ist ein universell verwendbares Befestigungselement für den bevorzugten Gebrauch in der Sanitär-, Heizungs- und Lüftungsbranche.

Die Montageschiene weist erfindungsgemäß eine rasterartige Anordnung von verschiedenartigen Befestigungslöchern auf. Der Mittelachsenabstand der parallel zu den Flachstahllängskanten jeweils in einer Reihe angeordneten Befestigungslöcher beträgt vorzugsweise 20 mm. Durch den Mittelachsenabstand von 20 mm wird ein variabler Montageabstand, auch das im der Sanitär- Heizungs- und Lüftungsbranche übliche Montagestichmaß von 100 mm, erreicht.

Durch die Ausbildung von Langlöchern im Verlauf der Reihen der runden Befestigungslöcher, wird vorteilhaft ein weiteres übliches, standardisiertes Montagestichmaß von 153 mm, welches inbesondere zur Armaturenmontage erforderlich ist, bereitgestellt. Dieses Montagestichmaß ergibt sich als 6-Zoll-Maß und aufgrund der Länge einer Wandfliese zusammen mit einer Fugenbreite.

Durch die vorteilhafte rastermäßige Anordnung der Befestigungslöcher in mehreren, vorzugsweise fünf, Reihen, in welchen die Befestigungslöcher jeweils um 10 mm versetzt zu den Befestigungslöchern einer anderen Reihe angeordnet sind, wird eine nahezu milimetergenaue Anordnung der Befestigungselemente bzw. Armaturen ermöglicht. In einer zu den Langlöchern versetzten Reihe oder in dieser selbst befindet sich dadurch jeweils ein in der Längsrichtung mittig zentriert gelegenes Mittel-Befestigungsloch.

Die Montageschiene ist aufgrund ihrer Abmessungen, welche vorzugsweise in der Länge 200 cm, in der Breite 5 cm und in der Dicke 4 mm betragen, in den im Sanitärbereich üblichen Transportwagen transportierbar und platzsparend lagerbar.

Die Montageschiene ist aufgrund ihrer Gestaltung geeignet, vom Monteur direkt an den Montageort den dortigen Erfordernissen ohne besondere Spezialwerkzeuge angepasst zu werden, indem die Montageschiene auf das erforderliche Maß abgelängt wird. Hierzu sind auf Baustellen übliche Werkzeuge, z.B. eine Schneidhexe, verwendbar. Die passend abgelängte Montageschiene wird durch die nicht zur Befestigung der Installationselemente belegten Lochungen mittels Schrauben einfach an den Montagegrund, z.B. an einer Wand oder Decke, befestigt. Sofern im Montagegrund Winkel, Hohlräume oder Sprünge zu überwinden sind, wird die abgelängte Montageschiene mittels einer Biegemaschine, insbesondere einer Rinneisenbiege, welche zum üblichen Werkzeug eines Installateurs gehört, passend zurechtgebogen und dann angeschraubt. Die Befestigung der Versorgungsleitungen oder der Armaturen erfolgt mit den bekannten anschraubbaren Befestigungselementen.

Die Montageschiene weist vorzugsweise parallel zu den Flachstahlkanten ein- oder beidseitig eingebrachte Sicken auf. Durch die Sicken wird in Verbindung mit einer Abwinkelung der Randbereiche die Tragfähigkeit und die Resistenz gegen Biegespannungen der Montageschiene, z. B. bei der Deckenmontage, vorteilhaft erhöht. Weiterhin lassen sich U-förige Schutzstreifen oder Kantenversteifungsstreifen in die Sicken einschieben, wobei die Streifen die Kantenbereiche umgreifen. Die Versteifungsstreifen werden zweckmäßig vor dem Aufschieben geeignet abgelängt, so daß sie nicht mitgebogen zu werden brauchen.

Bei besonders intensiven Biegespannungsbelastungen sind an die Montageschiene zur zusätzlichen Stabilisierung Versteifungsstreben anschraubbar.

Die erfindungsgemäße Montageschiene ist kostengünstig herzustellen und systemungebunden mit allen bekannten unterschiedlichen Befestigungselementen kombinierbar. Die Lochungsrasterung deckt alle im Sanitär-, Heizungs- und Lüftungsbereich üblichen Stichmaße ab und ist daher universell verwendbar. Hierdurch werden die Lagerkosten erheblich reduziert und der Monteur kann flexibel, ohne kostenintensive Zeiteinbußen, auf ungeplante Montageprobleme reagieren.

Die vorstehend beschriebene Montageschiene ist systemungebunden mit unterschiedlichen Befestigungselementen und/oder Armaturen verwendbar und ohne Spezialwerkzeuge leicht montierbar und bietet einen guten Halt. Neben den mit der beschriebenen Montageschiene kompatiblen Befestigungselementen finden noch anders ausgestaltete Befestigungselemente bzw. Armaturen in der Sanitär-, Heizungs- und Lüftungsbranche Verwendung. Die Rohrleitungen sind aufgrund der vorgegebenen Örtlichkeiten oftmals nicht parallel oder in dem exakten Montageabstand angeordnet. Deshalb werden, um diese Ungenauigkeiten auszugleichen und das exakte Montagestichmaß zu ereichen, zur Montage von Armaturen mit Montageschienen Armaturanschlüsse unterschiedlicher Ausgestaltung, z.B. Wandscheiben, im Handel angeboten, welche um 45°, 90°, 135° und 180° versetzte Rohranschlüsse ermöglichen. Es sind Wandscheiben bekannt, welche durch drei in einem 90° - Winkel zueinander mit einem Diagonalstichmaß von 40 mm angeordneten Bohrungen montierbar sind. Weiter sind Wandscheiben bekannt, welche durch einen Achtkant mit Innengewinde verdrehsicher montierbar sind.

Weitere Aufgabe der Erfindung ist es, die eingangs genannte Montageschiene dahingehend zu verbessern, daß sie systemungebunden mit weiteren bekannten Befestigungselementen und/oder Armaturen, insbesondere Wandscheiben verwendbar ist, wobei um 45°, 90°, 135° und 180° versetzte Rohranschlüsse leicht montierbar sind. Dies wird dadurch erreicht, daß die Befestigungslöcher und/oder die Verlängerungsbereiche derselben abschnittsweise derart zueinander angeordnet sind, daß mindestens eine quadratische Lochgruppenanordnungen mit einem Diagonalmaß von 40 mm längsgerichtet und mindestens eine Lochgruppenanordnung mit einem Diagonalmaß von 40 mm mit einer längsgerichteten Diagonalen ausgebildet sind.

Ein Ausgestaltung bestehe darin, daß in einer mittleren Lochreihe zwischen einem runden Befestigungsloch mit einem Durchmesser von 8,5 mm und einem Langloch, dessen Erweiterungsmaß vorzugsweise 8,5 cm beträgt, in 10 mm Rasterabstand vom runden Befestigungsloch ein gedachtes Quadrat mit einem Diagonalmaß von 40 mm zentriert ist, an dessen Ecken Befestigungslöcher mit einem Durchmesser von 6,2 mm, welche die zweite und sechste Lochreihe bilden und sich mit Befestigungslöchern der dritten und fünften Lochreihe mit einem Durchmesser von 8,5 mm jeweils überschneiden, sind, wobei die Befestigungslöcher der ersten und siebten Lochreihe jeweils einen Mittenabstand von 20 mm und einen Durchmesser von 5,1 mm aufweisen und deren Lage etwa gemittelt zu den benachbarten Befestigungslöchern der zweiten und dritten bzw. fünften und sechsten Lochreihe und in Längsrichtung symetrisch zu den Befestigungslöchern der dritten und fünften Lochreihe ist, so daß ein gedachtes Quadrat mit einem Diagonalmaß von 40 mm und jeweils einem Freifeld von 6,2 mm an den Eckpunkten desselben von diesen Befestigungslöchern und den runden Befestigungslöchern der Mittelreihe gebildet ist.

Vorteilhafte Ausgestaltungen sind Gegenstand der Unteransprüche. Die erfindungsgemäße Montageschiene ist ein universell verwendbares Befestigungselement für den bevorzugten Gebrauch in der Sanitär-, Heizungs- und Lüftungsbranche. Durch die erfindungsgemäße Gestaltung der Montageschiene wird deren vielseitige Verwendbarkeit erhöht.

Die Montageschiene weist erfindungsgemäß eine rasterartige Anordnung von verschiedenartigen Befestigungslöchern auf. Neben dem im der Sanitär- Heizungs- und Lüftungsbranche üblichen Montagestichmaß von 100 mm wird vorteilhaft ein weiteres übliches, standardisiertes Montagestichmaß von 153 mm, welches inbesondere zur Armaturenmontage erforderlich ist, bereitgestellt. Dieses Montagestichmaß ergibt sich als 6-Zoll-Maß und aufgrund der Länge einer Wandfliese zusammen mit einer Fugenbreite.

Durch die vorteilhafte rastermäßige Anordnung der Befestigungslöcher in mehreren, vorzugsweise sieben, Reihen, in welchen die Befestigungslöcher jeweils um 10 mm versetzt zu den Befestigungslöchern einer anderen Reihe angeordnet sind, wird eine nahezu milimetergenaue Anordnung der Befestigungselemente bzw. Armaturen ermöglicht.

Darüberhinaus wird durch die Anordnung der Befestigungslöcher mit einem Durchmesser von 6,2 mm, welche die zweite und sechste Lochreihe bilden und der Befestigungslöcher der ersten und siebten Lochreihe mit einem Durchmesser von 5,1 mm eine variable Montage von Wandscheiben mit in einem Diagonalstichmaß von 40 mm angeordneten Bohrungen in einem 45°-, 90°-, 135°- und 180°-Winkel ermöglicht.

Durch die erfindungsgemäße Anordnung der Befestigungslöcher auf der Montageschiene hat diese ein sich alle 4 cm wiederholendes feldartiges Lochraster. Durch dieses sich alle 4 cm wiederholendes Lochraster fällt bei Montagearbeiten wenig Verschnitt an. Zudem ist hierdurch die Montageschiene ohne viel Aufwand herzustellen, da zur Herstellung nur ein, dieses Lochrasterfeld von 4 cm Länge erfassendes, Stanzwerkzeug notwendig ist, mit welchem das Befestigungslochraster in 4 cm-Schritten sukzessive ausgestanzt wird.

Die Lochanordnung auf der Montageschiene ist vorzugsweise so gestaltet, daß die sich nicht überschneidenden Befestigungslöcher randseitig zueinander mindestens 2 mm beabstandet sind. Hierdurch ist eine ausreichende Stabilität der Montageschiene gewährleistet.

Die sich überschneidenden Befestigungslöcher der zweiten und dritten bzw. fünften und sechsten Lochreihe überlappen sich vorteilhaft um weniger als die Hälfte ihrer Fläche. Die hierdurch geschaffenen Befestigungslöcher sind durch Schrauben mit entsprechend kleinem Querschnitt ähnlich einem Langloch längenvariabel nutzbar. Bei Verwendung von Schrauben mit einem Querschnitt, welcher annähernd oder genau dem jeweiligen Befestigungslochdurchmesser entspricht, umgreift das genutzte Befestigungsloch die Schraube um mehr als 180°, wodurch ein genauer Sitz dieser Schraube gesichert ist.

Vorteilhaft sind einzelne Befestigungslöcher gleichmäßig achtzackig gestaltet, wobei deren Ecken jeweils rechtwinkelig sind und die Befestigungslöcher kantenparallel zur Längsrichtung der Montageschiene oder um 45° verdreht zu dieser ausgebildet sind. Diese Ausgestaltung ermöglicht eine verdrehsichere Montage von Wandscheiben mit einem Acht- oder Vierkantsteckprofil in um jeweils 45° variablen Montagewinkeln.

Vorzugsweise ist die Montageschiene mit einer Befestigungsplatte mit mindestens acht Vorbohrungen ausgestattet, deren Befestigungsplattenfläche nahezu quadratisch ist. Die Breite dieser Befestigungsplattenfläche entspricht vorzugsweise der Breite der Montageschiene, wobei zwei gegenüberliegende Längskanten der Befestigungsplatte rechtwinkelig gebogen sind und die Montageschiene längskantenseitig umlappen.

Die Befestigungsplatte ist vorteilhaft aus Blech von einer für Blechschrauben geeigneten Stärke gefertigt, wobei die Vorbohrungen passend für ein Eindrehen von Blechschrauben sind. Die Anordnung der Vorbohrungen zueinander entspricht der Anordnung der Befestigungslöcher, welche die Eckpunkte der zwei gedachten Quadrate bilden.

Vorzugsweise sind die Mittelachsen der Vorbohrungen konzentrisch auf der Befestigungsplatte um einen Mittelpunkt jeweils um 45° versetzt angeordnet sind, wobei ein Mittelachsenabstand der jeweils diametral des Mittelpunktes angeordneten Vorbohrungen 40 mm beträgt.

Durch die Befestigungsplatte wird die Montage von z.B. Wandscheiben mit in einem Diagonalstichmaß von 40 mm angeordneten Bohrungen erheblich erleichtert. Die Befestigungsplatte wird zur Montage hinter die Montageschiene verbracht. Die um die Montageschiene gebogenen Längskanten der Befestigungsplatte sichern einen genauen Sitz derselben.

Zur Befestigung der Wandscheibe wird diese in dem erforderlichen Montagewinkel auf die Montageschiene gesetzt und Schrauben durch die Wandscheibenbohrungen, die erfindungsgemäß deckungsgleichen Befestigungsbohrungen geführt und in die aus Sicht der Wandscheibe hinter der Montageschiene angeordneten, ebenfalls deckungsgleichen Vorbohrungen der Befestigungsplatte gedreht.

In einer vorteilhaften Ausführung sind die Vorbohrungen der Befestigungsplatte beidseitig ihrer Mittelachsen zum Mittelpunkt und entgegengesetzt um ein Erweiterungsmaß, welches vorzugsweise 0,5 cm beträgt, zu Langlöchern erweitert. Durch diese Gestaltung werden vorteilhaft Stichmaßungenauigkeiten der zu montierenden Wandscheiben ausgeglichen. Diese treten oftmals bei Rotgußwandscheiben oder Importware auf.

Vorteilhaft ist mittig in der Befestigungsplatte ein achtzackiges Befestigungsloch ausgespart, dessen Ecken jeweils rechtwinkelig sind und welches kantenparallel zur Längsrichtung der Montageschiene oder um 45° verdreht zu dieser ausgebildet ist. Die Befestigungsplatte ist hierdurch ebenfalls zur verdrehsicheren Montage von Wandscheiben mit einem Acht- oder Vierkantbefestigungsprofil mit Innengewinde verwendbar. Zur Montage ist die Befestigungsplatte zwischen die Wandscheibe und die Montageschiene geklemmt. Der Acht- oder Vierkant steckt im jeweils erforderlichen Montagewinkel im achtzackigen Befestigungsloch. Eine dem Innengewinde entsprechende Schraube wird durch ein mit dem achtzackigen Loch deckungsgleichen Befestigungsloch der Montageschiene gesteckt und in das Innengewinde des Vierkants gedreht.

Besonders vorteilhaft sind in der Befestigungsplatte die Vorbohrungen und das achtzackige Loch angeordnet.

Die Befestigungsplatte hat vorzugsweise eine Dicke von 0,5 mm bis 3 mm. Zur Befestigung einer Wandscheibe mit einem Vierkantprofil ist eine größere Dicke der Befestigungsplatte sinnvoll, um den Acht- oder Vierkant verdrehsicher aufzunehmen.

In einer anderen Ausführung ist die Befestigungsplatte von rechtwinkelig gebogenen Längskanten der Montageschiene, welche diese vorteilhaft verstärken, umlappt.

Die Anordnung von acht Vorbohrungen ist besonders vorteilhaft. Möglich ist beispielsweise auch eine scheibenförmige Gestaltung der Befestigungsplatte mit weniger Vorbohrungen mit einem Stichmaß von 40 mm, wobei eine Verdrehsicherung durch eine in ein nicht belegtes Befestigungsloch greifende Rastnase erfolgt.

Vorteilhaft ist die Montageschiene mit einem Trägerschlitten, welcher beispielsweise zur Vorwandmontage von Heizkörpern genutzt wird, ausgestattet. Der Trägerschlitten ist auf der Montageschiene in Längsrichtung beweglich angeordnet, wobei er durch eine Feststellschraube an der jeweiligen Montageposition feststellbar ist. Diese zusätzliche Ausstattung der Montageschiene ist insbesondere bei der Montage von Heizkörpern an Leichtbauwände sehr vorteilhaft, da die an den statisch tragenden Teilen der Wand befestigte Montageschiene über die Trägerschlitten den montierten Heizkörper trägt. Durch die bewegliche Anordnung des Trägerschlittens ist eine Montage ohne Vorgabe eines bestimmten Montagemaßes möglich. Die Trägerkonstruktion ist den Erfordernissen vor Ort flexibel anpassbar. Vorzugsweise ist die Montageschiene bei der Heizkörpermontage vertikal ausgerichtet, da in der vertikalen Stellung die Hebelverhältnisse und die Kraftaufnahme an der Montageschiene besonders günstig sind.

Der Trägerschlitten ist in einer ersten Ausführung mit einem durch um die obere und untere Längskante der Montageschiene gebogene Klemmbacken flach auf der Montageschiene gehaltenen Gleitkörper und einem senkrecht auf diesen angeordneten Tragarm ausgestattet, wobei die Klemmbacken des Gleitkörpers durch eine im Gleitkörper gehaltene Feststellschraube soweit lösbar sind, daß deren Abstand zueinander größer als die Breite der Montageschiene ist.

Vorteilhaft besteht der Gleitkörper aus zwei kantenparallel zusammenstoßenden, im wesentlichen L-förmigenigen Teilkörpern, wovon ein erster Teilkörper eine größere Teilgleitfläche als der zweite Teilkörper und den Tragarm aufweist. Die Teilkörper sind an der Stoßstelle jeweils L-förmigig abgebogen und liegen flächig aneinander. Sie sind am Stoßflächenende umfalzt, so daß die beiden Teilkörper um die Falznaht schwenkbar sind, wobei eine Schwenkung durch Drehen der durch die aneinanderliegenden Teilkörperflächen gedrehten Feststellschraube bewirkt wird.

Der Tragarm ist vorzugsweise mit einem senkrecht zur Teilgleitfläche ausgerichteten Langloch zur verstellbaren Befestigung von Heizkörpertragelementen gestaltet.

In einer zweiten vorteilhaften Ausführung ist der Trägerschlitten einstückig aus Stahlblech gestanzt. Der Tragarm ist in dieser Ausführung senkrecht zur Gleitfläche gebogen. Die Gleitfläche wird mit den umgebogenen Klemmbacken durch die eingedrehte Feststellschraube an der Montageschiene befestigt. Diese Ausführung ist besonders kostengünstig und einfach herzustellen.

In einer dritten vorteilhaften Ausführung besteht der Trägerschlitten aus zwei kantenparallel zusammenstoßenden, im wesentlichen L-förmigen Teilkörpern, welche an der Stoßstelle flächig aneinanderliegen. Der Tragarm dieses Trägerschlittens wird von den aneinanderliegenden L-Schenkeln, welche nur von der Feststellschraube zusammengehalten werden, gebildet. Die L-Schenkel haben vorteilhaft Aussparungen zur Aufnahme z.B. eines Heizkörpers. Diese Ausführung ist besonders einfach an der bereits montierten Montageschiene zu befestigen, indem die beiden L-förmigen Teilkörper direkt an der Montageschiene mit der Feststellschraube zusammengeschraubt werden und so die Klemmbacken sich an der Montageschiene festklemmen.

Die Montageschiene ist aufgrund ihrer Gestaltung geeignet, vom Monteur direkt an den Montageort den dortigen Erfordernissen ohne besondere Spezialwerkzeuge angepasst zu werden, indem die Montageschiene auf das erforderliche Maß abgelängt wird. Hierzu sind auf Baustellen übliche Werkzeuge, z.B. eine Schneidhexe, verwendbar. Die passend abgelängte Montageschiene wird durch die nicht zur Befestigung der Insatallationselemente belegten Lochungen mittels Schrauben einfach an den Montagegrund, z.B.einer Wand oder Decke, befestigt. Sofern im Montagegrund Winkel, Hohlräume oder Sprünge zu überwinden sind, wird die abgelängte Montageschiene mittels einer Biegemaschine, insbesondere einer Rinneisenbiege, welche zum üblichen Werkzeug eines Installateurs gehört, passend zurechtgebogen und dann angeschraubt. Die Befestigung der Versorgungsleitungen oder der Armaturen erfolgt mit den bekannten anschraubbaren Befestigungselementen.

Die erfindungsgemäße Montageschiene ist kostengünstig herzustellen und systemungebunden mit fast allen bekannten unterschiedlichen Befestigungselementen kombinierbar. Die Lochungsrasterung deckt alle im Sanitär-, Heizungs- und Lüftungsbereich üblichen Stichmaße ab und ist daher universell verwendbar. Hierdurch werden die Lagerkosten erheblich reduziert und der Monteur kann flexibel, ohne kostenintensive Zeiteinbußen, auf ungeplante Montageprobleme reagieren. Die Befestigungsplatte und der Trägerschlitten ermöglichen eine vielfältige Verwendung der Montageschiene.

Die Erfindung wird nachfolgend anhand der Figuren 1 bis 12 näher erläutert.
- Fig. 1: zeigt eine Aufsicht eines Montageschienenabschnitts;
- Fig. 2: zeigt schematisch eine beispielhafte Hohlraummontage mittels der Montageschiene aus einer Sicht von oben;
- Fig. 3: zeigt schematisch zwei Möglichkeiten der Deckenmontage mittels der Montageschiene;
- Fig. 4: zeigt einen Querschnitt einer Montageschiene mit aufgesetzten Versteifungsstreifen;
- Fig. 5: zeigt eine Aufsicht eines Montageschienenabschnitts;
- Fig. 6: zeigt eine Aufsicht der Befestigungsplatte;
- Fig. 7: zeigt eine Aufsicht eines Abschnittes der Montageschiene mit einer aufgeschraubten Wandscheibe;
- Fig. 8: zeigt einen Querschnitt IV.- IV. durch die Montageschiene mit aufgeschraubter Wandscheibe;
- Fig. 9: zeigt einen Querschnitt durch die Montageschiene mit einer zwischen der Montageschiene und einem aufgeschraubten Anschlußwinkel mit Achtzackbefestigung angeordneter Befestigungsplatte;
- Fig. 10: zeigt eine Seitenansicht eines Trägerschlittens;
- Fig. 11: zeigt beispielhaft einen einstückig aus Stahlblech gestanzten Trägerschlitten;
- Fig. 12: zeigt einen Trägerschlitten aus zwei kantenparallel zusammenstoßenden, im wesentlichen L-förmigen Teilkörpern.

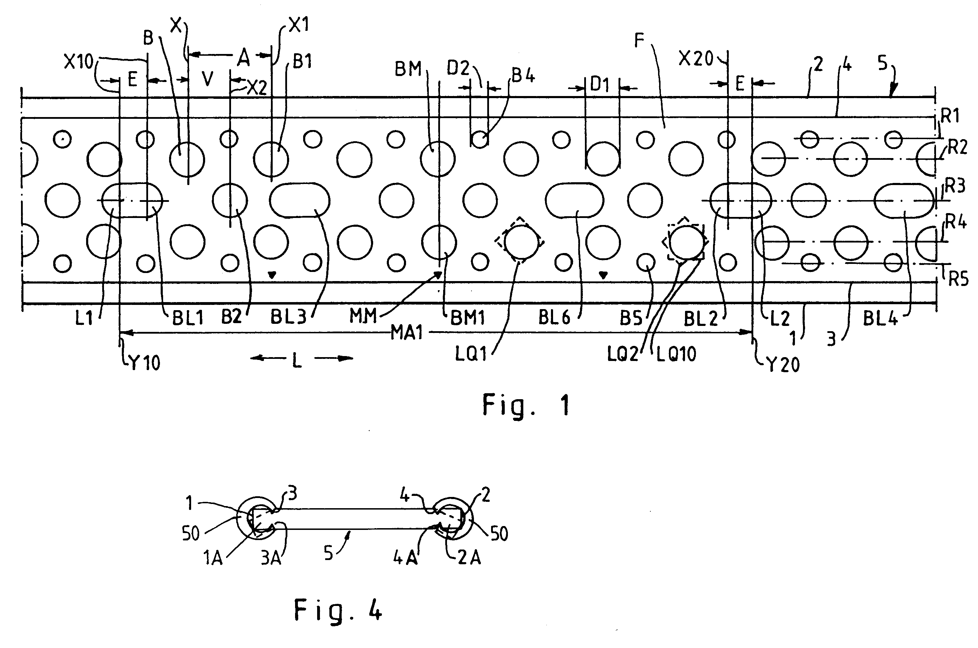

Fig. 1 zeigt eine Aufsicht der Montageschiene (5). Die Montageschiene (5) ist ein Flachstahl mit fünf zu den Flachstahlkanten (1, 2) parallelen Lochreihen (R1 - R5) mit Befestigungslöchern (B, B1 - B5; BM, BM1) und Langlöchern (BL1 - BL6), wobei ursprünglich rastermäßig mit einem Mittenabstand (A) und einem Mittenversatz (V) von Reihe zu Reihe angeordnete Löcher jeweils durch in der Längsrichtung (L) der Schiene verlängerte Lochbereiche (L1, L2) als ein Langloch (BL1, BL2) ausgebildet sind.In der Längsrichtung mittig zentriet zu den rastermäßigen Querachsen (X10, X20) der Langlöcher (BL1, BL2), sowie zu den Querachsen (Y10, Y20) der Rundungen der Verlängerungsbereiche (L1, L2) liegen jeweils Mittelbefestigungslöcher (BM, BM1), die im allgemeinen zur Befestigung eines Abflußrohres dienen, wohingegen die Langlöcher (BL1, BL2) zur Befestigung der zugehörigen Warm- und Kaltwasserarmaturen vorgesehen sind. Deren Abstand ist verabredungsgemäß einem Stichmaß von 153 mm gemäß gewählt, welches der Länge einer Kachel zusammen mit einer Fuge entspricht. Um diesen Standardmontageabstand (MA1) zu erreichen, sind die Langlöcher um ein Erweiterungsmaß (E) von jeweils 6,5 mm in der Längsrichtung vergrößert. Die Erweiterungsbereiche (L1, L2) sind mit ihren Querachsen (Y10, Y20) der Rundungen der Verlängerungsbereiche dargestellt.

Die Lochreihen (R2, R3, R4), die die Mittel-Befestigungslöcher (BM, BM1) und die die Langlöcher (BL1, BL2) enthalten, weisen vorzugweise einen Durchmesser von 8 mm auf, der innerhalb der Toleranzen auch dem gebräuchlichen 5/16 Zoll-Maß genügt. Die randseitig gelegenen Reihen (R1, R5) weisen vorzugsweise 4 mm Löcher auf, da sie im allgemeinen zur Befestigung mittels Bolzen, Stahlnägeln oder Blechschrauben zu Hilfsverschraubungen an der anschließenden Wandung oder benachbarten Objekten vorgesehen sind.

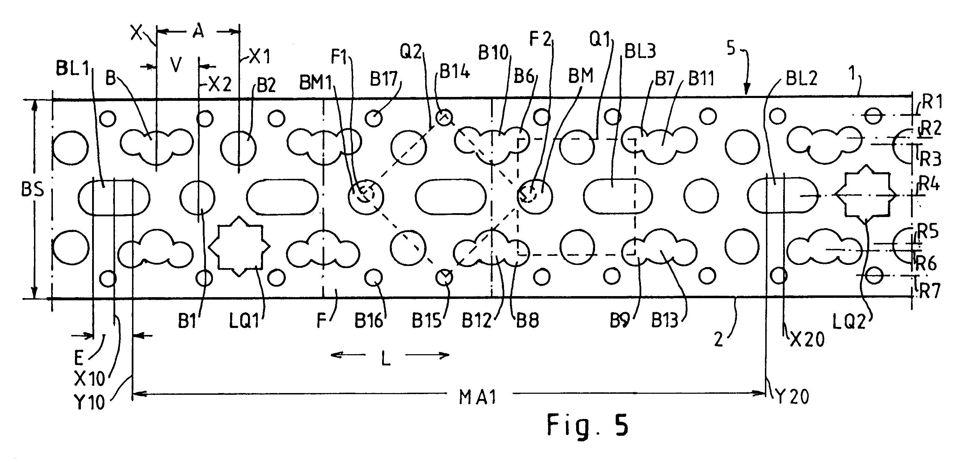

Der Abstand der einzelnen Lochreihen, welche den großen Durchmesser (D1) von 8 mm haben, ist untereinander zweckmäßig auf 10 mm festgelegt, und der Abstand der randseitigen Reihen mit dem kleineren Durchmesser (D2) von 4 mm ist jeweils zur nächsten benachbarten Reihe mit vorzugsweise 7 1/2 mm vorgesehen. Das ganze Flachstahlmaterial hat zweckmäßig eine Breite von 50 mm, eine Dicke von 4 mm und eine Länge von 2000 mm. Entlang der Flachstahlkanten (1, 2) sind Sicken (3, 4) eingebracht, entlang denen ohne großen Aufwand eine Abwinkelung, vorzugsweise in einem stumpfen Winkel vorgenommen werden kann, damit das Flachstahlmaterial in besonderen Belastungsfällen hohe Biegekräfte aufnehmen kann. Weiterhin können die Sicken (3, 4) zum Aufschieben von Schutzstreifen oder Versteifungsstreifen genutzt werden, wie in Fig. 4 näher dargestellt ist.

Die einzelnen Befestigungslöchern (B, B1, B2) der verschiedenen Lochreihen (R1 - R5) sind von Reihe zu Reihe jeweils um 10 mm versetzt. Hierdurch sind jeweils alle 10 mm in Längsrichtung geeignete Bohrungen für eine Montage vorhanden. Weiterhin sind jeweils mehrere Löcher in der Querrichtung nebeneinanderliegend vorhanden, wodurch entsprechend diesen Mittelachsen eine Schwächung des Flachstahlmaterials gegeben ist, die eine genaue Abwinkelung bezüglich des 10 mm Rasters erleichtern.

Vorzugsweise sind in einem Lochungsfeld (F) mehrere Langlöcherpaare (BL1, BL2; BL3, BL4) vorgesehen, so daß jeweils bei der Zurichtung eines Schienenabschnittes allenfalls ein geringer Verschnitt auftritt.

Jeweils dort, wo sich die Mittel-Befestigungslöcher (BM, BM1) befinden, sind auf der Schiene zweckmäßig Markierungen (MM) angebracht, welche die Orientierung bei einer Montage und Zurichtung erleichtern.

Es ist vorgesehen, daß einige der Löcher mit quadratischen Ausstanzungen (LQ1, LQ2, LQ10) versehen sind, die kantenparallel zur Längsrichtung (L) und/oder um 45° verdreht zu dieser ausgebildet sind. Derartige quadratische oder achtzackige Löcher, die vorzugsweise eine Kantenlänge der Quadrate von 10 mm aufweisen, dienen der Verdrehsicherung von Armaturen, welche mit entsprechenden quadratischen Ansätzen versehen sind.

Die Montageschiene (5) weist parallel zu den Flachstahlkanten (1, 2) Sicken (3, 3A; 4, 4A) auf, durch welche sich die Tragfähigkeit der Montageschiene (5) erhöhen läßt, indem der Randbereich (1A, 2A) jeweils dort abgebogen wird. Die Abbiegung erfolgt vorzugsweise zu einem stumpfen höchstens einem rechten Winkel.

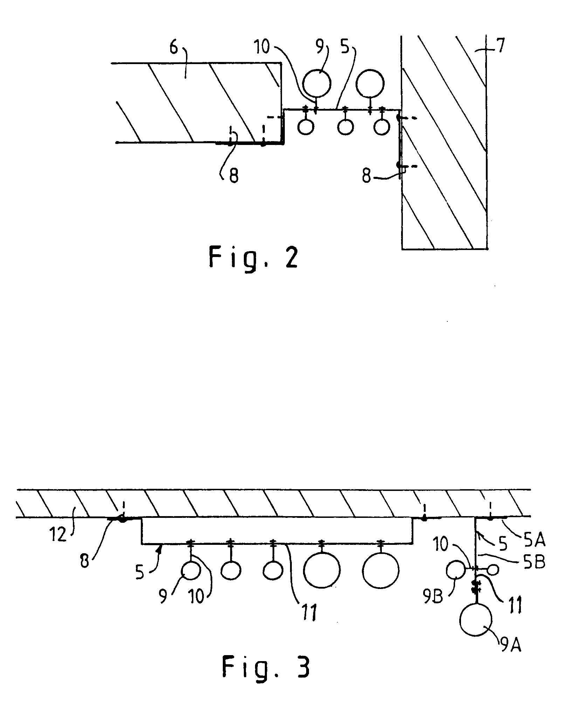

Fig. 2 zeigt schematisch eine beispielhafte Hohlraummontage von Leitungen in einem vertikalen Schacht mittels einer Montageschiene (5) aus einer Sicht von oben. Die Montageschiene (5) ist, nachdem sie auf das erforderliche Maß gekappt wurde, in dieser beispielhaften Montageanordnung mittels einer Biegemaschiene dreimal entsprechend den Konturen des Mauerwerks (6, 7) gebogen und so dem Hohlraum zwischen der Quermauer (6) und der Längsmauer (7) angepasst. Die Montageschiene (5) ist durch die, durch die nicht sichtbaren Lochungen geführte, gestrichelt angedeutete Schrauben (8) an den Mauern (6, 7) beidseitig des Hohlraumes befestigt. An der Montageschiene (5) sind als Kreis gezeichnete Versorgungsleitungen (9) mit herkömmlichen Abstandsträgern (10) befestigt. Die Beabstandung erfolgt durch die entsprechend bemessenen Bolzen und geeignet angeordneten Anschlägen oder Kontermuttern.

Fig. 3 zeigt schematisch zwei Möglichkeiten der Deckenmontage mittels der Montageschiene (5). Die Montageschiene (5) ist in dem ersten Montagebeispiel, nachdem sie auf das erforderliche Maß gekappt wurde, mittels einer Biegevorrichtung so gebogen, daß der zur Montage benötigte Montageschienenabschnitt (11) parallel zur Decke (12) angeordnet ist. Die Montageschiene (5) ist mit durch die nicht sichtbaren Befestigungslöcher geführte, gestrichelt angedeutete Schrauben (8) an der Decke (12) beidseitig des Montageschienenabschnittes (11) befestigt. An der Montageschiene (5) sind als Kreis gezeichnete Versorgungsleitungen (9) mit herkömmlichen Abstandsträgern (10) befestigt. Das zweite Montagebeispiel zeigt eine rechtwinkelig gebogene Montageschiene (5), welche mit einem Winkelschenkel (5A) an der Decke (12) angeschraubt ist. An dem anderen Winkelschenkel (5B) sind untenendig ein großes Versorgungsrohr (9A) angehängt und seitlich zwei kleinere Versorgungsleitungen (9B) mit herkömmlichen Abstandsträgern (10) befestigt.

Die in Fig. 2 und Fig. 3 dargestellten Montagemöglichkeiten veranschaulichen die Vielseitigkeit der offenbarten Montageschiene.

Fig. 4 zeigt einen Querschnitt der Montageschiene (5) mit aufgeschobenen Kantenversteifungsstreifen (50). Das Flachstahlmaterial ist entlang der Randbereiche (1A, 2A) beidseitig mit Sicken (3, 3A; 4, 4A) versehen. Die Kantenversteifungsstreifen (50), die U-förmig ausgebildet sind, und die Randbereiche (1A, 2A) der Montageschiene (5) umschließen, greifen formschlüssig im Preßsitz in die Sicken ein. Gestrichelt sind alternativ vorgesehene abgewinkelte Randbereiche dargestellt, welche ebenfalls eine Versteifung des Flachstahlmaterials bewirken.

Die Querverteilung der Lochreihen läßt sich anstelle der Anordnung nach Fig. 1 in verschiedener Weise variieren, wobei als weitere bevorzugte Alterantive jeweils eine Vertauschung der beiden seitlich gelegenen Reihen (R1, R2; R4, R5) vorgenommen ist. Die Erfindung eignet sich weiter zur Berücksichtigung anderer standardisierter Stichmaße, indem entsprechende Lang-löcher an anderen Stellen und/oder Lochreihen eingebracht werden.

Fig. 5 zeigt eine Aufsicht der Montageschiene (5). Die Montageschiene (5) ist ein Flachstahl mit sieben zu den Flachstahlkanten (1, 2) parallelen Lochreihen (R1 - R7) mit Befestigungslöchern (B, B1 - B17; BM, BM1) und Langlöchern (BL1 - BL3), wobei ursprünglich die Querachsen (X, X1, X2) der Befestigungslöcher (B, B1, B2) in den verschiedenen Lochreihen (R1 - R7) rastermäßig mit einem Achsabstand (A) und einem Achsversatz (V) angeordnet sind. In der mittleren Lochreihe (R4) sind einzelne Befestigungslöcher (BL1 - BL3) durch in der Längsrichtung (L) der Schiene verlängerte Lochbereiche als Langlöcher (BL1 - BL3) ausgebildet. Die rastermäßigen Querachsen (X10, X20) der Langlöcher (BL1, BL2), sowie die Querchsen (Y10, Y20) durch die Mitten der Rundungen der Verlängerungsbereiche liegen symmetrisch in der Längsrichtung (L) beiderseits von Mittelbefestigungslöchern (BM, BM1), die im allgemeinen zur Befestigung eines Abflußrohres dienen, wohingegen die Langlöcher (BL1 - BL3) zur Befestigung der zugehörigen Warm- und Kaltwasserarmaturen vorgesehen sind. Deren Abstand ist verabredungsgemäß einem Stichmaß von 153 mm gemaß gewählt, welches der Länge einer Kachel zusammen mit einer Fuge entspricht. Um diesen Standardmontageabstand (MA1) zu erreichen, sind die Langlöcher um ein Erweiterungsmaß (E) von jeweils 8,5 mm in der Längsrichtung vergrößert.

In der mittleren Lochreihe (R4) ist zwischen einem runden Befestigungsloch (BM) mit einem Durchmesser von 8,5 mm und einem Langloch (BL3) in 10 mm Rasterabstand vom runden Befestigungsloch (B) ein gedachtes Quadrat (Q1) mit einem Diagonalmaß von 40 mm zentriert, an dessen Ecken Befestigungslöcher (B6 - B9) mit einem Durchmesser von 6,2 mm, welche die zweite und sechste Lochreihe (R2, R6) bilden, angeordnet. Die Befestigungslöcher (B6 - B9) der zweiten und sechsten Lochreihe (R2, R6) überschneiden sich mit Befestigungslöchern (B10 - B13) der dritten und fünften Lochreihe (R3, R5), welche einen Durchmesser von 8,5 mm haben. Die Befestigungslöcher (B14 - B17) der ersten und siebten Lochreihe (R1, R7) weisen jeweils einen Mittenabstand von 20 mm und einen Durchmesser von 5,1 mm auf, wobei deren Lage etwa gemittelt zu den benachbarten Befestigungslöchern der zweiten und dritten bzw. fünften und sechsten Lochreihe (R2, R3, R6, R7) und in Längsrichtung (L) symetrisch zu den Befestigungslöchern (B, B2, B10 - B13) der dritten und fünften Lochreihe (R3, R5) ist. Durch diese Anordnung wird ein zweites gedachtes Quadrat (Q2) mit einem Diagonalmaß von 40 mm und jeweils einem Freifeld (F1, F2) von 6,2 mm an den Eckpunkten desselben von den Befestigungslöchern (B14, B15) und den runden Befestigungslöchern (BM, BM1) der Mittelreihe (R4) gebildet.

Die sieben Lochreihen (R1 - R7) sind jeweils symetrisch zur Mitte zueinander parallel angeordnet, wobei sich durch die erfindungsgemäße Anordnung der einzelnen Befestigungslöcher ein Abstand der Mittelachsen der mittleren vierten Lochreihe (R4) zu den Mittelachsen der dritten und fünften Lochreihe (R3, R5) von 12 mm, zu den Mittelachsen der zweiten und sechsten Lochreihe (R2, R6) von 14,14 mm und zu den Mittelachsen der ersten und siebten Lochreihe (R1, R7) von 20 mm ergibt.

Die Befestigungslöcher sind in der ersten und der siebten Lochreihe (R1, R7) zueinander abwechselnd 16 mm und 24 mm, in der zweiten und sechsten Lochreihe (R2, R7) 12 mm und 28 mm und in der der dritten und fünften Lochreihe (R3, R5) 20 mm beabstandet. Die mittlere vierte Lochreihe (R4) weist abwechselnd in einem Mittenabstand von 20 mm ein rundes Befestigungsloch (B1, BM, BM1) und ein Langloch (BL1 - BL3) auf.

Das ganze Flachstahlmaterial hat zweckmäßig eine Breite (BS) von 50 mm, eine Dicke von 4 mm und eine Länge von 2000 mm.

Die einzelnen Befestigungslöchern (B, B1 - B17; BM, BM1) der verschiedenen Lochreihen (R1 - R7) sind von Reihe zu Reihe jeweils um höchstens 10 mm versetzt. Hierdurch sind jeweils mindestens alle 10 mm in Längsrichtung geeignete Bohrungen für eine Montage in einem standardmäßigen Montageabstand (MA1) vorhanden. Weiterhin sind jeweils mehrere Löcher in der Querrichtung nebeneinanderliegend vorhanden, wodurch entsprechend diesen Querachsen eine Schwächung des Flachstahlmaterials gegeben ist, die eine genaue Abwinkelung bezüglich des 10 mm Rasters erleichtern.

Durch die Anordnung der Befestigungslöcher auf der Montageschiene hat diese ein sich alle 4 cm wiederholendes feldartiges Lochraster (F), dessen beispielhafte Seitenbegrenzung strichpunktiert dargestellt ist, so daß jeweils bei der Zurichtung eines Schienenabschnittes allenfalls ein geringer Verschnitt auftritt.

Die Querverteilung der Lochreihen läßt sich anstelle der dargestelten Anordnung in verschiedener Weise variieren, wobei als weitere bevorzugte Alterantive jeweils eine Vertauschung der beiden seitlich gelegenen Reihen (R1, R2, R3; R5, R6, R7) vorgenommen ist. Die Erfindung eignet sich weiter zur Berücksichtigung anderer standardisierter Stichmaße, indem entsprechende Langlöcher an anderen Stellen und/oder Lochreihen eingebracht werden

Es ist vorgesehen, daß einige der Befestigungslöcher mit quadratischen Ausstanzungen (LQ1, LQ2) versehen sind, die kantenparallel zur Längsrichtung (L) und/oder um 45° verdreht zu dieser ausgebildet sind. Gezeichnet sind achtzackige Ausstanzungen (LQ1, LQ2). Derartige quadratische oder achtzackige Löcher (LQ1, LQ2), die vorzugsweise eine Kantenlänge der Quadrate von 10 mm aufweisen, dienen der Verdrehsicherung von Armaturen, welche mit entsprechenden quadratischen oder achtzackigen Ansätzen versehen sind.

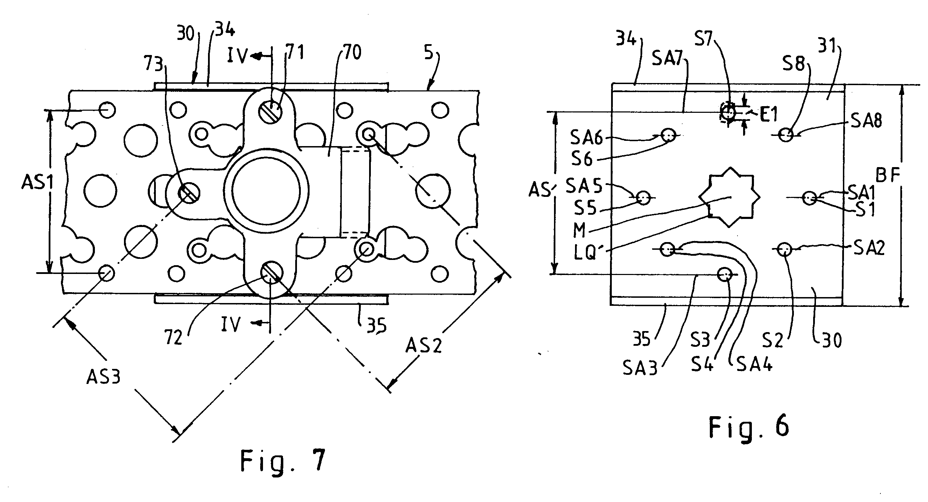

Fig. 6 zeigt eine Aufsicht der Befestigungsplatte (30). Die Befestigungsplatte (30) mit Vorbohrungen (S1 - S8) ist zur schnellen und einfachen Montage von Armaturen an der Montageschiene angeordnet. Die Befestigungsplattenfläche (31) ist nahezu quadratisch. Die Breite (BF) der Befestigungsplattenfläche (31) entspricht einer in Fig. 5 dargestellten Breite (BS) der Montageschiene, wobei entweder zwei gegenüberliegende Längskanten (34, 35) der Befestigungsplatte (30) rechtwinkelig gebogen sind und die Montageschiene längskantenseitig umlappen oder die Befestigungsplatte (30) von rechtwinkelig gebogenen Längskanten der Montageschiene umlappt wird. Vorteilhaft sind mindestens acht Vorbohrungen (S1 - S8) in der Befestigungsplatte (30) den Eckpunkten der in Fig. 5 gezeichneten gedachten Quadrate auf der Montageschiene entsprechend angeordnet.

Die Mittelachsen (SA1 - SA8) der Vorbohrungen (S1 - S8) sind konzentrisch auf der Befestigungsplatte (30) um einen Mittelpunkt (M) jeweils um 45° versetzt angeordnet, wobei ein Mittelachsenabstand (AS) der jeweils diametral des Mittelpunktes (M) angeordneten Vorbohrungen (S1 - S8) 40 mm beträgt.

Gestrichelt ist beispielhaft eine Vorbohrung (S7) beidseitig ihrer Querachse (SA) zum Mittelpunkt (M) und entgegengesetzt um ein Erweiterungsmaß (E1), welches vorzugsweise 0,5 cm beträgt, zu Langlöchern erweitert gezeichnet.

Die Befestigungsplatte (30) ist vorteilhaft aus Blech von einer für Blechschrauben geeigneten Stärke gefertigt. Entsprechend sind die Vorbohrungen (S1 - S8) passend für ein Eindrehen von Blechschrauben ausgelegt. Möglich ist bei von dem vorgegebenen Vorbohrungsstichmaß abweichender Montage eine Verwendung von selbstschneidenden Metallschrauben.

Mittig ist in der Befestigungsplatte (30) ein achtzackiges Loch (LQ') ausgespart, dessen Ecken jeweils rechtwinkelig sind und welches kantenparallel zur Längsrichtung (L) oder um 45° verdreht zu dieser ausgebildet ist.

Vorteilhaft sind in der Befestigungsplatte (30) die Vorbohrungen (S1 - S8) und das achtzackige Loch (LQ') angeordnet.

Die Befestigungsplatte (30) hat vorzugsweise eine Dicke von 0,5 mm bis 3 mm hat. Die jeweilige Dicke hängt von der Verwendung der Befestigungsplatte (30) ab, wobei zwei Verwendungsbeispiele in den Fig. 7 - Fig. 9 dargestellt sind.

Fig. 7 zeigt einen Abschnitt der Montageschiene (5) mit einer aufgeschraubten Wandscheibe (70), wobei die Schrauben (71 - 73) in die Vorbohrungen der aus der Sicht des Betrachters rückseitig hinter der Montageschiene (5) angeordnete Befestigungsplatte (30), wovon die um die Montageschiene (5) gebogenen Längskanten (34, 35) sichtbar sind, gedreht sind.

Aus der Zeichnung wird deutlich, daß jeweils um 45° verdreht auf der Montageschiene (5), und entsprechend auf der rückseitigen Befestigungsplatte, Befestigungslöcher bzw. Vorbohrungen in einem Mittelachsabstand (AS1 - AS3) von 40 mm angeordnet sind, wodurch eine variable Montage der Wandscheibe (70) ermöglicht wird.

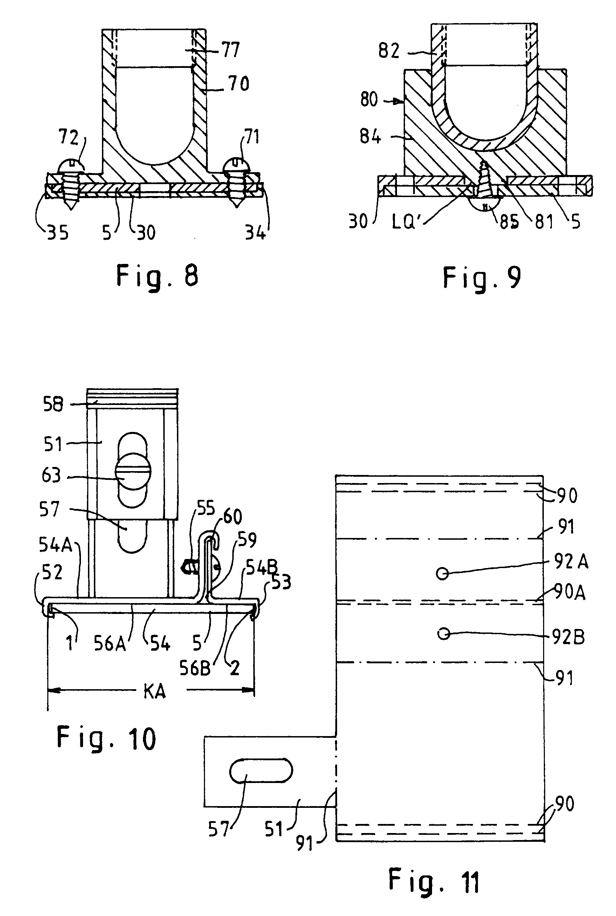

Fig. 8 zeigt einen Querschnitt IV.- IV. durch die Montageschiene (5) mit aufgeschraubter Wandscheibe (70). Die Wandscheibe (70) hat ein Innengewinde (77) zur Schraubmontage von Rohranschlüssen. Die Wandscheibe (70) ist durch Schrauben (71, 72), welche durch die entsprechenden Befestigungslöcher der Montageschiene (5) in die Vorbohrungen der hinter der Montageschiene (5) angeordneten Befestigungsplatte (30) gedreht sind, gehalten.

Zwei gegenüberliegende Längskanten (34, 35) der Befestigungsplatte (30) sind rechtwinkelig gebogen und umlappen die Montageschiene (5) längskantenseitig.

Bei der gezeichneten Nutzung der Befestigungsplatte (30) rückseitig der Montageschiene (5) als Befestigungselement ist eine Dicke von 0,5 mm - 1,5 mm ausreichend, um der montierten Armatur einen stabilen Halt zu gewähren.

Fig. 9 zeigt einen Querschnitt durch die Montageschiene (5) mit einer zwischen der Montageschiene (5) und einem aufgeschraubten Anschlußwinkel (80) mit Achtzackbefestigung (81) angeordneter Befestigungsplatte (30). Der Anschlußwinkel (80) besteht aus einem schraubbaren Metallwinkelrohr (82), welches in einer Kunststoffmanschette (84) mit angegossener Achtzackbefestigung (81) eingelassen ist. Die Befestigungsplatte (30) ist zwischen der Montageschiene (5) und dem aufgeschraubten Anschlußwinkel (80) mit Achtzackbefestigung (81) angeordnet. Die Achtzackbefestigung (81) ist in das achtzackige Befestigungsloch der Befestigungsplatte (30) gesteckt und mit einer rückseitig durch die Montageschiene (5) und die Befestigungsplatte (30) in die Kunststoffmanschette (84) eingedrehten Schraube (85) gehalten.

Die Befestigungsplatte (30) hat in dieser Ausführung eine der Achtzackbefestigung (81) entsprechende Dicke von 2 mm.

Die dargestellte Kunststoffmanschette (84) ist von dem Metallwinkelrohr (82) lösbar und in verschiedenen Ausführungen, denen die Achtzackbefestigung (81) gemeinsam ist, handelsgebräuchlich.

Fig. 10 zeigt eine Seitenansicht eines Trägerschlittens. Der Trägerschlitten ist mit einem durch um die obere und untere Längskante (1, 2) der Montageschiene (5) gebogene Klemmbacken (52, 53) flach auf der Montageschiene (5) gehaltenen Gleitkörper (54) und einem senkrecht auf diesen angeordneten Tragarm (51) ausgestattet. Die Klemmbacken (52, 53) des Gleitkörpers (54) sind durch eine im Gleitkörper (54) gehaltene Feststellschraube (55) soweit lösbar, daß deren Abstand (KA) zueinander größer als die Breite der Montageschiene (5) ist.

Der Gleitkörper (54) besteht aus zwei kantenparallel zusammenstoßenden, im wesentlichen L-förmigen Teilkörpern (54A, 54B), wovon ein erster Teilkörper (54A) eine größere Teilgleitfläche (56A) als der zweite Teilkörper (54B) und den Tragarm (51) aufweist, welcher vorzugsweise mit einem senkrecht zur Teilgleitfläche (56A, 56B) ausgerichteten Langloch (57) zur verstellbaren Befestigung von Heizkörpertragelementen (58) ausgestattet ist. Der Tragarm (51) ist so mit einer Schraubbefestigung (63) in der gewünschten Länge einstellbar. Die Teilkörper (54A, 54B) sind an deren gemeinsamen Stoßstelle (59) jeweils L-förmig abgebogen und liegen flächig aneinander.

Die beiden Teilkörper (54A, 54B) sind um das Stoßflächenende bzw. die Falznaht (60) schwenkbar, wobei eine Schwenkung durch Drehen der durch die aneinanderliegenden Teilkörperflächen gedrehten Feststellschraube (55) bewirkt wird.

Fig. 11 zeigt beispielhaft einen auseinandergewickelten, einstückig aus Stahlblech gestanzten Trägerschlitten. Diese Ausführung ist besonders kostengünstig und einfach herzustellen. Die Biegestellen zur endgültigen Formgebung des Trägerschlittens (50A) sind gestrichelt bzw. strichpunktiert dargestellt.

An den gestrichelt gezeichneten Biegestellen (90) wird der Trägerschlitten (50A) bis auf der zwischen den Vorbohrungen (92A, 92B) angeordnete Biegestelle (90A), an welcher der Trägerschlitten (50A) ungefähr um 180° vom Betrachter aus nach unten gebogen wird, um ungefähr 90° nach unten gebogen. An den strich-punktierten Biegestellen (91), somit auch der Tragarm (51) mit Langloch (57), wird der Trägerschlitten (50A) um ungefähr 90° zum Betrachter gebogen. Die Vorbohrungen (92A, 92B) liegen nach der Biegung aufeinander, so daß eine Einstellschraube zur Verstellung des Klemmbackenabstandes leicht eindrehbar ist.

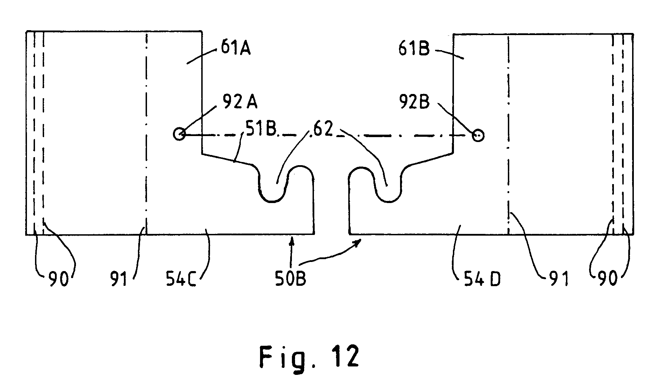

Fig. 12 zeigt einen Trägerschlitten (50B) aus zwei kantenparallel zusammenstoßenden, im wesentlichen L-förmigen Teilkörpern (54C, 54D). Der Trägerschlitten (50B) ist in eine Wickelzeichnung dargestellt. Die Biegestellen zur endgültigen Formgebung des Trägerschlittens (50B) sind gestrichelt bzw. strich-punktiert dargestellt.

An den gestrichelt gezeichneten Biegestellen (90) wird der Trägerschlitten (50B) um ungefähr 90° nach unten gebogen. An den strich-punktierten Biegestellen (91) wird der Trägerschlitten (50B) um ungefähr 90° zum Betrachter gebogen. Die Vorbohrungen (92A, 92B) liegen nach der Biegung aufeinander, so daß eine Einstellschraube zur Verstellung des Klemmbackenabstandes leicht eindrehbar ist.

Der Trägerschlitten (50B) besteht aus Zwei Teilkörpern (54C, 54D), welche zusammenmontiert an ihrer gemeinsamen Stoßstelle flächig aneinanderliegen. Der Tragarm (51B) wird von den aneinanderliegenden L-Schenkeln (61A, 61B), welche von der Feststellschraube zusammengehalten werden, gebildet und hat beispielhaft gezeichnete Aussparungen (62) zur Aufnahme z.B. eines Heizkörpers.

Diese Ausführung des Trägerschlittens (50B) ist besonders zur Montage schwerer Heizkörper geeignet, da der Tragarm (51B) mit seiner Fläche parallel zu Schwerkraftrichtung des Heizkörpers ausgerichtet ist.

## Patentansprüche

1. Montageschiene (5) aus Flachstahl, insbesondere zur Installation von Versorgungsleitungen (9, 9A, 9B) und Sanitär-, Heizungs- und Lüftungsarmaturen, mit mehreren in der Längsrichtung (L) parallel zu den Flachstahllängskanten (1, 2) angeordneten Lochreihen (R1 - R5) mit Befestigungslöchern (B, B1, B2; BM, BM1), wobei die jeweils in einer Lochreihe angeordneten Befestigungslöcher (B1, B2; BM, BM1) einen festen rasterförmigen Mittenabstand (A) aufweisen, dadurch gekennzeichnet, daß die Mitten der
Befestigungslöcher (B, B1, B2) der verschiedenen Lochreihen (R1 - R5) in der Längsrichtung einen Versatz (V) aufweisen, so daß deren Lochmitten einen 10 mm-Längsrasterabstand abdecken und daß jeweils abschnittsweise solche rastermäßigen Befestigungslöcher paarweise in der Längsrichtung (L) zu Langlöchern (BL1, BL2) mindestens um ein solches Erweiterungsmaß (E) verlängert sind, das kleiner als der Versatz (V) ist, so daß der Längeabstand, mittig der Rundungen der demgemäß versetzten Lochbereiche gemessen, einen standardmäßigen Montageabstand (MA1) von etwa 153 mm ergibt, und daß sich jeweils in der Längsrichtung mittig zwischen den verlängerten Lochbereichen (L1, L2) zentriert rastermäßig mindestens ein Mittel-Befestigungsloch (BM, BM1) befindet.

2. Montageschiene nach Anspruch 1, dadurch gekennzeichnet, daß der Mittenabstand (A) der Befestigungslöcher (B, B1) in den einzelnen Lochreihen (R1 - R5) jeweils 20 mm beträgt und der Versatz (V) der Befestigungslöcher (B, B1; B2) in den verschiedenen Lochreihen (R2, R3; R3, R4) 10 mm beträgt.

3. Montageschiene nach Anspruch 1 oder 2, dadurch gekennzeichnet, daß das Erweiterungsmaß (E) der Langlöcher (BL1, BL2) 6,5 mm beträgt

4. Montageschiene nach Anspruch 3, dadurch gekennzeichnet, daß zu den Langlöchern (BL1, BL2) mindestens zwei Mittel-Befestigungslöcher (BM, BM1) in verschiedenen Lochreihen (R2, R4) vorhanden sind.

5. Montageschienen nach einem der vorstehenden Ansprüche, dadurch gekennzeichnet, daß mehrere Paare von Langlöchern (BL1, BL2; BL3, BL4), die den standardmäßigen Montageabstand (MA1) haben, in der Längsrichtung (L) zusammen mit mindestens einem zugehörigen Mittel-Befestigungsloch versetzt gegeneinander angeordnet sind.

6. Montageschiene nach einem der vorstehenden Ansprüche, dadurch gekennzeichnet, daß die Befestigungslöcher jeweils in den einzelnen Lochreihen (R1 - R5) gleiche Lochdurchmesser (D1, D2) aufweisen.

7. Montageschiene nach Anspruch 6, dadurch gekennzeichnet, daß die Befestigungslöcher in den Lochreihen (R2 - R4), die die Langlöcher (BL1, BL2) und die Mittel-Befestigungslöcher (BM1, BM2) enthalten, einen ersten Lochdurchmesser (D1) von 8 mm aufweisen und die übrigen Befestigungslöcher (B4, B5) einen zweiten Lochdurchmesser (D2) von 4 mm aufweisen.

8. Montageschiene nach einem der vorstehenden Ansprüche, dadurch gekennzeichnet, daß sie parallel zu mindestens einer der Längskanten (1, 2) in einem ungelochten Randbereich (1A, 2A) eine einseitige oder doppelseitige Sicke (3, 3A; 4,4A) aufweist.

9. Montageschiene nach Anspruch 8, dadurch gekennzeichnet, daß mindestens einer der Randbereiche (1A, 2A) entlang der Sicke(n) (3, 3A; 4, 4A) stumpfwinklig bis rechtwinklig abgewinkelt ist.

10. Montageschiene nach Anspruch 8 oder 9, dadurch gekennzeichnet, daß in mindestens eine der Sicken (3, 3A; 4, 4A) ein U-förmiger Kantenschutz- und/oder Kantenversteifungsstreifen (50) im Preßsitz, formschlüssig eingreifend, den Randbereich (1A, 2A) umgreifend, eingesetzt ist.

11. Montageschiene nach einem der vorstehenden Ansprüche, dadurch gekennzeichnet, daß sie 50 mm breit, 4 mm dick und etwa 2000 mm lang ist.

12. Montageschiene nach Anspruch 11, dadurch gekennzeichnet, daß drei innere Lochreihen (R2 - R4), die Mittel-Befestigungslöcher (BM, BM1) und die Langlöcher (BL1, BL2) enthalten und diese Lochreihen (R2 - R4) jeweils 10 mm zueinander beabstandet sind und die übrigen, randseitig gelegenen Lochreihen (R1, R5) zu der jeweils benachbarten Lochreihe (R2, R4) 5 bis 10 mm beabstandet sind.

13. Montageschiene nach Anspruch 11, dadurch gekennzeichnet, daß die beiden Lochreihen, die die Mittelbefestigungslöcher enthalten, jeweils symmetrisch zur mittleren Längsachse angeordnet sind und 15 bis 18 mm von der mittleren Längsachse beabstandet sind und zwischen diesen Lochreihen weitere Lochreihen mit Befestigungslöchern kleinerer Lochdurchmesser angeordnet sind.

14. Montageschiene nach einem der vorstehenden Ansprüche, dadurch gekennzeichnet, daß einzelne der Befestigungslöcher (LQ1, LQ2; LQ10) quadratisch kantenparallel zur Längsrichtung (L) und/oder um 45° verdreht zu dieser ausgebildet sind.

15. Montageschiene nach einem der vorstehenden Ansprüche, dadurch gekennzeichnet, daß die Befestigungslöcher und/oder die Verlängerungsbereiche (B6, B7, B8, B9; F1, B14, F2, B15) derselben abschnittsweise derart zueinander angeordnet sind, daß mindestens eine quadratische Lochgruppenanordnung mit einem Diagonalmaß von 40 mm längsgerichtet und mindestens eine Lochgruppenanordnung mit einem Diagonalmaß von 40 mm mit einer längsgerichteten Diagonalen ausgebildet sind.

16. Montageschiene nach Anspruch 15, dadurch gekennzeichnet, daß in einer mittleren Lochreihe (R4) zwischen einem runden Befestigungsloch (BM) mit einem Durchmesser von 8,5 mm und einem Langloch (BL3), dessen Erweiterungsmaß (E) vorzugsweise 8,5 cm beträgt, in 10 mm Rasterabstand vom runden Befestigungsloch (B) ein gedachtes Quadrat (Q1) mit einem Diagonalmaß von 40 mm zentriert ist, an dessen Ecken Befestigungslöcher (B6 - B9) mit einem Durchmesser von 6,2 mm, welche die zweite und sechste Lochreihe (R2, R6) bilden und sich mit Befestigungslöchern (B10 - B13) der dritten und fünften Lochreihe (R3, R5) mit einem Durchmesser von 8,5 mm jeweils überschneiden, sind, wobei die Befestigungslöcher (B14 - B17) der ersten und siebten Lochreihe (R1, R7) jeweils einen Mittenabstand von 20 mm und einen Durchmesser von 5,1 mm aufweisen und deren Lage etwa gemittelt zu den benachbarten Befestigungslöchern der zweiten und dritten bzw. fünften und sechsten Lochreihe (R2, R3, R6, R7) und in Längsrichtung (L) symetrisch zu den Befestigungslöchern der dritten und fünften Lochreihe (R3, R5) ist, so daß ein gedachtes Quadrat (Q2) mit einem Diagonalmaß von 40 mm und jeweils einem Freifeld (F1, F2) von 6,2 mm an den Eckpunkten desselben von diesen Befestigungslöchern (B14 - B 17) und den runden Befestigungslöchern (BM, BM1) der Mittelreihe (R4) gebildet ist.

17. Montageschiene (5) nach Anspruch 15, dadurch gekennzeichnet, daß die sich nicht überschneidenden Befestigungslöcher randseitig zueinander mindestens 2 mm beabstandet sind und die sich überschneidenden Befestigungslöcher (B6 - B13) der zweiten und dritten bzw. fünften und sechsten Lochreihe (R2, R3, R5, R6) sich um weniger als die Hälfte ihrer Fläche überlappen.

18. Montageschiene (5) nach Anspruch 15, 16 oder 17, dadurch gekennzeichnet, daß einzelne der Befestigungslöcher (LQ1, LQ2) gleichmäßig achtzackig sind, wobei die Ecken jeweils rechtwinkelig und die Befestigungslöcher (LQ1, LQ2) kantenparallel zur Längsrichtung (L) oder um 45° verdreht zu dieser ausgebildet sind.

19. Montageschiene (5) nach Anspruch 15, dadurch gekennzeichnet, daß eine Befestigungsplatte (30) mit Vorbohrungen (S1 - S8) an der Montageschiene (5) angeordnet ist, deren Befestigungsplattenfläche (31) nahezu quadratisch ist und eine Breite (BF) der Befestigungsplattenfläche (31) einer Breite (BS) der Montageschiene (5) entspricht, wobei entweder zwei gegenüberliegende Längskanten (34, 35) der Befestigungsplatte (30) rechtwinkelig gebogen sind und die Montageschiene (5) längskantenseitig umlappen oder die Befestigungsplatte (30) von rechtwinkelig gebogenen Längskanten (1, 2) der Montageschiene (5) umlappt wird und daß Vorbohrungen, vorzugsweise mindestens acht Vorbohrungen (S1 - S8) den Eckpunkten der gedachten Quadrate (Q1, Q2) entsprechend angeordnet sind.

20. Montageschiene (5) nach Anspruch 19, dadurch gekennzeichnet, daß die Mittelachsen (SA1 - SA8) der Vorbohrungen (S1 - S8) konzentrisch auf der Befestigungsplatte (30) um einen Mittelpunkt (M) jeweils um 45° versetzt angeordnet sind, wobei ein Mittelachsenabstand (AS) der jeweils diametral des Mittelpunktes (M) angeordneten Vorbohrungen (S1 - S8) 40 mm beträgt.

21. Montageschiene (5) nach einem der Ansprüche 19 oder 20, dadurch gekennzeichnet, daß die Vorbohrungen (S7) beidseitig ihrer Mittelachsen (SA)zum Mittelpunkt (M) und entgegengesetzt um ein Erweiterungsmaß (E1), welches vorzugsweise 0,5 cm beträgt, zu Langlöchern erweitert sind.

22. Montageschiene (5) nach einem der Ansprüche 19 bis 21, dadurch gekennzeichnet, daß die Befestigungsplatte (30) aus Blech von einer für Blechschrauben geeigneten Stärke ist und die Vorbohrungen (S1 - S8) passend für ein Eindrehen von Blechschrauben sind.

23. Montageschiene (5) nach Anspruch 15, dadurch gekennzeichnet, daß mittig in der Befestigungsplatte (30) ein achtzackiges Loch (LQ') ausgespart ist, dessen Ecken jeweils rechtwinkelig sind und welches kantenparallel zur Längsrichtung (L) oder um 45° verdreht zu dieser ausgebildet ist.

24. Montageschiene (5) nach einem der Ansprüchen 19 bis 23, dadurch gekennzeichnet, daß in der Befestigungsplatte (30) die Vorbohrungen (S1 - S8) und das achtzackige Loch (LQ') sind.

25. Montageschiene (5) nach einem der Ansprüchen 19 bis 24, dadurch gekennzeichnet, daß die Befestigungsplatte (30) eine Dicke von 0,5 mm bis 3 mm hat.

26. Montageschiene (5) nach Anspruch 15, dadurch gekennzeichnet, daß an der Montageschiene (5) ein Trägerschlitten (50, 50A, 50B) mit einem durch um die obere und untere Längskante (1, 2) der Montageschiene (5) gebogene Klemmbacken (52, 53) flach auf der Montageschiene (5) gehaltenen Gleitkörper (54) und einem senkrecht auf diesen angeordneten Tragarm (51) angeordnet ist, wobei die Klemmbacken (52, 53) des Gleitkörpers (54) durch eine im Gleitkörper (54) gehaltene Feststellschraube (55) soweit lösbar sind, daß deren Abstand (KA) zueinander größer als die Breite (BS) der Montageschiene (5) ist.

27. Montageschiene (5) nach Anspruch 26, dadurch gekennzeichnet, daß der Gleitkörper (54) aus zwei kantenparallel zusammenstoßenden, im wesentlichen L-förmigen Teilkörpern (54A, 54B) besteht, wovon ein erster Teilkörper (54A) eine größere Teilgleitfläche (56A) als der zweite Teilkörper und den Tragarm (51) aufweist, welcher vorzugsweise mit einem senkrecht zur Teilgleitfläche (56A, 56B) ausgerichteten Langloch (57) zur verstellbaren Befestigung von Heizkörpertragelementen (58) ausgestattet ist, wobei die Teilkörper (54A, 54B) an der Stoßstelle (59) jeweils L-förmig abgebogen sind und flächig aneinanderliegen und am Stoßflächenende (60) umfalzt sind, so daß die beiden Teilkörper (54A, 54B) um die Falznaht (60) schwenkbar sind, wobei eine Schwenkung durch Drehen der durch die aneinanderliegenden Teilkörperflächen (60A, 60B) gedrehten Feststellschraube (55) bewirkt wird.

28. Montageschiene (5) nach Anspruch 26, dadurch gekennzeichnet, daß der Trägerschlitten (50A) einstückig aus Stahlblech gestanzt ist, wobei der Tragarm (51A) senkrecht zur Gleitfläche (56C) gebogen ist und Gleitfläche (56C) mit den umgebogenen Klemmbacken (52, 53) durch die Feststellschraube (55) verstellbar ist.

29. Montageschiene (5) nach Anspruch 26, dadurch gekennzeichnet, daß der Trägerschlitten (50) aus zwei kantenparallel zusammenstoßenden, im wesentlichen L-förmigen Teilkörpern (54C, 54D), welche an der Stoßstelle (59) flächig aneinanderliegen, besteht, wobei der Tragarm (51B) von den aneinanderliegenden L-Schenkeln (61A, 61B), welche von der Feststellschraube (55) zusammengehalten werden, gebildet wird und die L-Schenkel (61A, 61B) Aussparungen (62) zur Aufnahme z.B. eines Heizkörpers haben.

## Claims

1. Mounting rail (5) made of flat steel bar, more particularly for the installation of supply lines (9, 9A, 9B) and sanitary, heating and ventilation fittings, having a plurality of rows of holes (R1 - R5) which are disposed parallel to the longer edges of the flats (1, 2) in the longitudinal direction (L) and have fixing holes (B, B1, B2; BM, BM1), the fixing holes (B1, B2; BM, BM1) disposed in each case in a row of holes having a fixed grid-like centre-to-centre distance (A),
characterised in that the centres of the fixing holes (B, B1, B2) of the various rows of holes (R1 - R5) exhibit an offset (V) in the longitudinal direction, with the result that the hole centres thereof cover a 10 mm longitudinal grid distance and that in each case over certain sections pairs of such grid-type fixing holes are extended in the longitudinal direction (L) to form slots (BL1, BL2) by at least an extending amount (E) that is smaller than the offset (V), with the result that the lengthwise distance, measured at the centres of the rounds of the accordingly offset hole zones, produces a standard mounting distance (MA1) of around 153 mm, and that in each case longitudinally in the middle between the extended hole zones (L1, L2), centred in the manner of a grid, is at least one midpoint fixing hole (BM, BM1).

2. Mounting rail according to claim 1, characterised in that the centre-to-centre distance (A) of the fixing holes (B, B1) in the various rows of holes (R1 - R5) is in each case 20 mm and the offset (V) of the fixing holes (B, B1; B2) in the various rows of holes (R2, R3; R3, R4) is 10 mm.

3. Mounting rail according to claim 1 or 2, characterised in that the amount (E) by which the slots (BL1, BL2) are extended is 6.5 mm.

4. Mounting rail according to claim 3, characterised in that at the slots (BL1, BL2) there are at least two midpoint fixing holes (BM, BM1) in different rows of holes (R2, R4).

5. Mounting rail according to any of the preceding claims, characterised in that a plurality of pairs of slots (BL1, BL2; BL3, BL4) having the standard mounting distance (MA1) are offset with respect to one another in the longitudinal direction (L) together with at least one associated mixpoint fixing hole.

6. Mounting rail according to any of the preceding claims, characterised in that the fixing holes in each of the individual rows of holes (R1 - R5) have identical hole diameters (D1, D2).

7. Mounting rail according to claim 6, characterised in that the fixing holes in the rows of holes (R2 - R4) containing the slots (BL1, BL2) and the midpoint fixing holes (BM1, BM2) have a first hole diameter (D1) of 8 mm and the remainder of the fixing holes (B4, B5) have a second hole diameter (D2) of 4 mm.

8. Mounting rail according to any of the preceding claims, characterised in that it incorporates a one-sided or double-sided crimp (3, 3A; 4, 4A) parallel to at least one of the long edges (1, 2) in an unperforated peripheral zone (1A, 2A).

9. Mounting rail according to claim 8, characterised in that at least one of the peripheral zones (1A, 2A) is bent back at an obtuse or right angle along the crimp or crimps (3, 3A; 4, 4A).

10. Mounting rail according to claim 8 or 9, characterised in that into at least one of the crimps (3, 3A; 4, 4A) is inserted a U-shaped edge protecting and/or edge reinforcing strip (5) in a force fit, with positive engagement, and clasping the peripheral zone (1A, 2A).

11. Mounting rail according to any of the preceding claims, characterised in that it is 50 mm wide, 4 mm thick and approximately 2000 mm long.

12. Mounting rail according to claim 11, characterised in that three inner rows of holes (R2 - R4) contain midpoint fixing holes (BM, BM1) and the slots (BL1, BL2) and these rows of holes (R2 - R4) are each spaced 10 mm from one another and the remaining rows of holes (R1, R5) situated at the periphery are spaced 5 to 10 mm from the respective adjacent row of holes (R2, R4).

13. Mounting rail according to claim 11, characterised in that the two rows of holes containing the midpoint fixing holes are in each case arranged symmetrical to the median longitudinal axis and are spaced 15 to 18 mm from the median longitudinal axis and between these rows of holes are arranged additional rows of holes with fixing holes having smaller hole diameters.

14. Mounting rail according to any of the preceding claims, characterised in that certain of the fixing holes (LQ1, LQ2; LQ10) are square in shape with edges parallel to the longitudinal direction (L) and/or turned at 45° thereto.

15. Mounting rail according to any of the preceding claims, characterised in that sections of the fixing holes and/or the extension zones (B6, B7, B8, B9; F1, B14, F2, B15) thereof are arranged in such a way with respect to one another that at least one square grouping of holes having a diagonal measurement of 40 mm is aligned longitudinally and at least one grouping of holes having a diagonal measurement of 40 mm is formed with a longitudinally aligned diagonal.

16. Mounting rail according to claim 15, characterised in that an imaginary square (Q1) with a diagonal measurement of 40 mm is centred in a middle row of holes (R4) between a round fixing hole (BM) with a diameter of 8.5 mm and a slot (BL3) extended by an amount (E) of preferably 8.5 cm, at a grid spacing of 10 mm from the round fixing hole (B), and at the corners of said square (Q1) are fixing holes (B6 - B9) with a diameter of 6.2 mm, which form the second and sixth row of holes (R2, R6) and overlap with fixing holes (B10 - B13) of the third and fifth row of holes (R3, R5) with respective diameters of 8.5 mm, the fixing holes (B14 - B17) of the first and seventh row of holes (R1, R7) in each case having a centre-to-centre distance of 20 mm and a diameter of 5.1 mm and their position being approximately in the middle of the neighbouring fixing holes of the second and third, and of the fifth and sixth row of holes, respectively (R2, R3, R6, R7) and being symmetrical to the fixing holes of the third and fifth row of holes (R3, R5) in the longitudinal direction (L), with the result that an imaginary square (Q2) with a diagonal measurement of 40 mm and in each case a free field (F1, F2) of 6.2 mm at the corner points thereof is formed by said fixing holes (B14 - B17) and the round fixing holes (BM, BM1) of the middle row (B4).

17. Mounting rail (5) according to claim 15, characterised in that the non-intersecting fixing holes are spaced apart from one another by at least 2 mm at the edge and the intersecting fixing holes (B6 - B13) of the second and third, and of the fifth and sixth row of holes respectively (R2, R3, R5, R6), overlap by less than half their area.

18. Mounting rail (5) according to claim 15, 16 or 17, characterised in that certain of the fixing holes (LQ1, LQ2) have eight uniform star points, and the corners are in each case right-angled and the fixing holes (LQ1, LQ2) are formed with their edges parallel to the longitudinal direction (L) or turned through 45° thereto.

19. Mounting rail (5) according to claim 15, characterised in that a fixing plate (30) with pilot holes (S1 - S8) is arranged on the mounting rail (5), its fixing plate surface (31) almost square and a width (BF) of the fixing plate surface (31) corresponding to a width (BS) of the mounting rail (5), and either two opposing long edges (34, 35) of the fixing plate (30) being bent at right angles and overlapping the mounting rail (5) on the longer edge side, or the fixing plate (30) being overlapped by long edges (1, 2) of the mounting rail (5) which are bent at right angles, and in that pilot holes, preferably at least eight of them (S1 - S8), are arranged to correspond to the corner points of the imaginary squares (Q1, Q2).

20. Mounting rail (5) according to claim 19, characterised in that the centre axes (SA1 - SA8) of the pilot holes (S1 - S8) are arranged concentrically on the fixing plate (30) around a midpoint (M) and in each case offset by 45°, and a centre-to-centre distance between axes (AS) of the pilot holes (S1 - S8) respectively arranged diametrically to the midpoint (M) is 40 mm.

21. Mounting rail (5) according to either of claims 19 or 20, characterised in that the pilot holes (S7) are extended to form slots on either side of their centre axes (SA) to the midpoint (M) and opposed by an extension amount (E1) of preferably 0.5 cm.

22. Mounting rail (5) according to any of claims 19 to 21, characterised in that the sheet-metal fixing plate (30) is of a thickness suitable for sheet-metal screws and the pilot holes (S1 - S8) are made to take sheet-metal screws.

23. Mounting rail (5) according to claim 15, characterised in that set in the centre of the fixing plate (30) is a star-shaped hole with eight points (LQ'), the corners of which are respectively right-angled and which has its edges parallel to the longitudinal direction (L) or turned through 45° thereto.

24. Mounting rail (5) according to any of claims 19 to 23, characterised in that in the fixing plate (30) are the pilot holes (S1 - S8) and the star-shaped hole with eight points (LQ').

25. Mounting rail (5) according to any of claims 19 to 24, characterised in that the fixing plate (30) has a thickness of 0.5 mm to 3 mm.

26. Mounting rail (5) according to claim 15, characterised in that arranged on the mounting rail (5) is a saddle (50, 50A, 50B) with a sliding unit (54) held flat on the mounting rail (5) by clamping jaws (52, 53) bent around the upper and lower long edge (1, 2) of the mounting rail (5) and a supporting arm (51) arranged perpendicularly on said sliding unit (54), the clamping jaws (52, 53) of the sliding unit (54) being releasable, by a binding screw (55) held in the sliding unit (54), until their spacing (KA) from one another is greater than the width (BS) of the mounting rail (5).

27. Mounting rail (5) according to claim 26, characterised in that the sliding unit (54) consists of two substantially L-shaped sub-units (54A, 54B) butted with their edges parallel, of which a first sub-unit (54A) has a larger sliding sub-surface (56A) than the second sub-unit and incorporates the supporting arm (51) which is preferably equipped with a slot (57) aligned perpendicularly to the sliding sub-surface (56A, 56B) for the adjustable attachment of heater supporting elements (58), the sub-units (54A, 54B) being in each case bent in an L-shape at the interface (59) and bearing against one another over a large area and being crimped over at the extremity of the abutting surface (60), thereby allowing the two sub-units (54A, 54B) to be swivelled about the folded seam (60), with swivelling being effected by turning the binding screw (55) turned through the adjoining sub-unit surfaces (60A, 60B).

28. Mounting rail (5) according to claim 26, characterised in that the saddle (50A) is stamped as one piece from sheet steel, the supporting arm (51A) being bent perpendicularly to the sliding surface (56C) and the sliding surface (56C) being adjustable with the bent clamping jaws (52, 53) by means of the binding screw (55).

29. Mounting rail (5) according to claim 26, characterised in that the saddle (50) consists of two substantially L-shaped sub-units (54C, 54D) butted together with their edges parallel, which bear against one another over a large area at the interface (59), the supporting arm (51B) being formed by the adjoining L-sides (61A, 61B) which are held together by the binding screw (55), and the L-sides (61A, 61B) having recesses (62) for receiving, for example, a heater.

## Revendications

1. Barre de montage (5) en acier plat, tout particulièrement pour l'installation de conduites d'alimentation (9, 9A, 9B) et de robinetterie sanitaire, de chauffage et de ventilation, avec plusieurs rangées de perforations (R1 à R5), disposées parallèlement au bord des aciers plats (1, 2), dans le sens de la longueur, avec perforations de fixation (B, B1, B2; BM, BM1), les perforations de fixation (B1, B2; BM, BM1) de chaque rangées présentant une distance de centre à centre (A) en forme de réseau,
caractérisée en ce que
les centres des perforations de fixation (B, B1, B2) des différentes rangées (R1 à R5) présentent un décalage (V) dans le sens de la longueur de sorte que leurs centres recouvrent un intervalle de réseau longitudinal de 10 mm et que de tels trous de fixation sont prolongés, par sections, dans le sens de la longueur (L), en trous oblongs (BL1, BL2), ceci dans une mesure (E) inférieure au décalage (V), de sorte que l'intervalle longitudinal, mesuré au centre des arrondissements des zones de trous décalées, donne un intervalle de montage standard (MA1) d'environ 153 mm, et qu'un trou de fixation central, au moins (BM, BM1) se trouve centré entre les zones de perforations prolongées (L1, L2).

2. Barre de montage selon la revendication1,
caractérisée en ce que
la distance de centre à centre (A) des trous de fixation (B, B1) est de 20 mm dans les différentes rangées de trous (R1 à R5) et que le décalage (V) des trous de fixation (B, B1; B2) est de 10 mm dans les différentes rangées de perforations (R2, R3; R3, R4).

3. Barre de montage selon la revendication 1 ou 2,
caractérisée en ce que
la mesure d'élargissement (E) des trous oblongs (BL1, BL2) est de 6,5 mm.

4. Barre de montage selon la revendication 3,
caractérisée en ce que
deux trous de fixation centraux (BM, BM1) au moins sont prévus dans les différentes rangées de perforations (R2, R4) en plus des trous oblongs (BL1, BL2).

5. Barre de montage selon l'une des revendications précédentes,
caractérisée en ce que
plusieurs paires de trous oblongs (BL1, BL2; BL3; BL4), présentant l'intervalle de montage standard (MA1), sont disposées, décalées, avec au moins un trou de fixation médian, afférent.

6. Barre de montage selon l'une des revendications précédentes,
caractérisée en ce que
les trous de fixation présentent le même diamètre de trou (D1, D2) dans les différentes rangées (R1 à R5) respectives.

7. Barre de montage selon la revendication 6,
caractérisée en ce que
les trous de fixation des rangées (R2 - R4), comprenant les trous oblongs (BL1, BL2) et les trous de fixation centraux (BM1, BM2), présentent un premier diamètre de trou (D1) de 8 mm, tandis que les autres trous de fixation (B4, B5) présentent un deuxième diamètre de trou (D2) de 4 mm.

8. Barre de montage selon les revendications précédentes,
caractérisée en ce qu'elle présente une moulure mono-ou bilatérale (3, 3A; 4, 4A) parallèle au moins à l'un des bords longitudinaux (1, 2), dans une zone marginale non perforée (1A, 2A)..

9. Barre de montage selon la revendication 8,
caractérisée en ce que
l'une des zones marginales (1A, 2A), au moins, est coudée en angle obtus ou angle droit le long de la (des) moulure(s) (3, 3A; 4, 4A).

10. Barre de montage selon la revendication 8 ou 9,
caractérisée en ce que
u une bande de protection et/ou de renforcement de bo en U (50) est insérée, en ajustage serré, dans au moins l'une des moulures (3, 3A; 4, 4A). laquelle, en engagement positif, embrasse la zone marginale (1A, 2A).

11. Barre de montage selon l'une des revendications précédentes,
caractérisée en ce que sa largeur est de 50 mm, son épaisseur de 4 mm et sa longueur de 2000 mm environ.

12. Barre de montage selon la revendication 11,
caractérisée en ce que
trois rangées intérieures (R2 - R4), comprenant les trous de fixation médians (BM, Bm1) et les trous oblongs (BL1, BL2) sont espacées de 10 mm l#Une de l'autre, tandis que les autres rangées de trous, disposées sur les bords (R2, R4) sont espacées de 5 à 10 mm.

13. Barre de montage selon la revendication 11,
caractérisée en ce que
les deux rangées de trous comprenant les trous de fiation médians sont disposées, chacune, symétriquement par rapport à l'axe longitudinal, central à intervalle de 15 à 18 mm de celui-ci et que d'autres rangées de trous de fixation, de diamètre inférieur, sont disposées entre ces deux rangées.

14. Barre de montage selon l'une des revendications précédentes,
caractérisée en ce que
des trous de fixation (LQ1, LQ2; LQ10) sont disposés en carrés imaginaires à bord parallèle au sens longitudinal (L) et/ou décalés de 45 degrés par rapport à ce dernier.

15. Barre de montage selon l'une des revendications précédentes,
caractérisée en ce que
les trous de fixation et/ou les zones de prolongement (B6, B7, B8, B9; F1, B14, F2, B15) de ceux-ci sont disposés, par secteurs, par rapport les uns aux autres de sorte qu'un groupe de trous, au moins, formant un carré imaginaire soit disposé selon le sens de la longueur et présente une dimension diagonale de 40 mm, tandis qu'un groupe au moins soit disposé de sorte que sa diagonale, parallèle au sens de la longueur, soit de 40 mm.

16. Barre de montage selon la revendication 15,
caractérisée en ce que,
dans une rangée de trous intérieure (R4), entre un trou de fixation rond (BM) d'un diamètre de 8,5 mm et un trou oblong (BL3), dont la dimension d'élargissement (E) est de préférence de 8,5 mm, à intervalle de réseau de 10 mm du trou de fixation rond (B), un carré imaginaire (Q1), présentant une dimension de diagonale de 40 mm, est centré, carré imaginaire (Q1) aux coins duquel se trouvent des trous de fixation (B6, B9) d'un d'un diamètre de 6,2 mm, qui forment la deuxième rangée et la sixième rangée de trous (R2, R6), ce carré imaginaire (Q1) coupant les trous de fixation (B10 - B13) de la troisième rangée et de la cinquième rangée de trous (R3, R5) d'un diamètre de 8,5 mm, les trous de fixation (B14 - B17) de la première rangée et de la septième rangée (R1, R7) présentant un intervalle de centre à centre de 20 mm et un diamètre de 5,1 mm, et leur position étant à peu près médiane pa rapport aux trous de fixation voisins de la deuxième et de la troisième resp. de la cinquième et de la sixième rangées (R2, R3, R6, R7) et, dans le sens longitudinal (L) symétriques aux trous de fixation de la troisième rangée et de la cinquième rangée de trous (R3, R5) de sorte qu'un carré imaginaire (Q2) d'une dimension de diagonale de 40 mm, avec un champ libre (F1, F2) de 6, 2 mm à ses angles, soit formé par ces trous de fixation (B14 - B 17) et les trous de fixation ronds (BM, BM1) de la rangée intérieure (R4).

17. Barre de montage selon la revendication 15,
caractérisée en ce que
les trous de fixation ne se coupant pas sont disposés, côté marginal, à intervalles d'au moins 2 mm et que les trous de fixation se coupant (B6 - B13) de la deuxième et de la troisième rangées resp. de la cinquième et de la sixième rangées (R2, R3, R5, R6) se chevauchent de moins de la moitié de leur surface.

18. Barre de montage selon l'une des revendications 15, 16 ou 17,
caractérisée en ce que
différents trous de fixation (LQ1, LQ2) sont uniformément pourvus de 8 pointes, les angles étant à angle droit par rapport au sens longitudinal (L) ou décalés de 45 degrés par rapport à celui-ci.

19. Barre de montage selon la revendication 15,
caractérisée en ce que
que la plaque de fixation (30, équipant la barre de montage, est pourvue de perforations péliminaires (S1 - S8), la surface (31) de la plaque de fixation étant presque carrée et sa largeur (BF) correspondant à une largeur (BS) de la barre de montage (5), que deux bords longitudinaux (34, 35) de la plaque de fixation (30), situés vis-à-vis l'un de l'autre, sont coudés à angle droit et embrassent le bord longitudinal de la barre de montage (5) ou bien la plaque de fixation (30) étant saisie par les bords longitudinaux (12) coudés à angle droit de la barre de montage (5) et des forures préalables, au moins 8 de préférence, (S1 - S8) sont disposées adéquatement aux angles des carrés imaginaires (Q1, Q2).

20. Barre de montage selon la revendication 19,
caractérisée en ce que
les angles médians (Sa1 - SA8) des forures préliminaires (S1 - S8) sont disposés, sur la plaque de fixation (30), concentriquement par rapport à un point central (M) resp. décalés de 45 degrés, un intervalle de l'axe médian (AS) des forures préalables (S1 - S8), de disposition diamétrale par rapport au point central (M) étant de 40 mm.

21. Barre de montage selon la revendication 19 ou 20,
caractérisée en ce que
les forures préalables (S7) sont élargies en trous oblongs des deux côtés de leurs axes médians (SA) par rapport au point central (M) et à l'opposé, leur dimention d'élargissement (E1) étant de préférence de 0,5 cm.

22. Barre de montage selonles revendications 19 à 21,
caractérisée en ce que
la plaque de fixation (30) est en tôle appropriée à l'utilisation de vis à tôle et que les perforations préalables (S1 - S8) sont adaptées auvissage de vis à tôle.

23. Barre de montage selon la revendication 15,
caractérisée en ce que
un trou à huit pointes (LQ') est pratiqué au milieu de la plaque de fixation (30) et que ses coins sont à angle droit par rapport au sens longitudinal (L), le bord de ce trou étant parallèle au sens longitudinal (L) ou décalé de 45 degrés par rapport à celui-ci.

24. Barre de montage selon l'une des revendications 19 à 23,
caractérisée en ce que
des forures préalables (S1 - S8) et le trou à huit pointes (LQ') sont prévus dans la plaque de fixation (30).

25. Barre de montage selon l'une des revendications 19 à 24,
caractérisée en ce que
la plaque de fixation a une épaisseur de 0,5 mm à 3 mm.

26. Barre de montage selon la revendication 15,
caractérisée en ce que
un support (50, 50A, 50B) est prévu avec un glissoir (54) (54) maintenu à plat sur la barre de montage par des mâchoires de serrage (52, 53) coudées autour du bord longitudinal supérieur et inférieur (1, 2) de la barre de montage et avec un bras (51), monté verticalement sur ce glissoir (54), les mâchoires de serrage du glissoir (54) étant desserrables à l'aide d'une vis de réglage (55) maintenue dans le glissoir (54) de sorte que l'intervalle entre elles (KA) soit supérieur à la largeur (BS) de la barre de montage (5).

27. Barre de montage selon la revendication 26,
caractérisée en ce que
le glissoir (54) est composé de deux pièces (54A, 54B) à bords parallèles, adjacents, essentiellement en forme de "L", une première pièce (54A) présentant une surface de glissement partielle (56A) plus grande que la deuxième et un bras support (51) qui, de préférence, est équipé d'un trou oblong (57) perpendiculaire à la surface de glissement partielle (56A, 56B) et destiné à la fixation réglable de supports d'éléments de chauffage (58), les pièces (54A, 54B) étant coudées en L au point de rencontre (59), leurs surfaces se contactant et leur extrémité (60) étant pliée de sorte que les deux pièces (54A, 54B) pivotent au pliage, le pivotement ayant lieu par déplacement de la vis de réglage (55) à travers les surfaces partielles (60A, 60B) des pièces adjacentes.

28. Barre de montage selon la revendication 26,
caractérisée en ce que
le support (50A) est découpé d'une pièce dans de la tôle d'acier, le bras support (51A), perpendiculaire à la surface de glissement (56c) étant coudé et la surface de glissement (56c) réglable avec les mâchoires de serrage coudées (52, 53) à l'aide de la vis de réglage (55).

29. Barre de montage selon la revendication 26,
caractérisée en ce que
le support (50) est composé de deux pièces (54C, 54D) essentiellement en forme de "L", à bords parallèles, adjacents, dont les surfaces se contactent au point de rencontre (59), le bras support (51B) étant formé par les branches adjacentes du "L", maintenues ensemble par la vis de réglage (55), et les branche du "L" (61A, 61B) présentant des évidements (62) destinés à recevoir, par exemple, un élément de chauffage.
